# EUROPEAN PATENT SPECIFICATION

(11) **EP 3 863 484 B1**
(45) Date of publication and mention of the grant of the patent: **27.09.2023**
(21) Application number: 18786302.2
(22) Date of filing: 12.10.2018
(51) Int. Cl.: A47L 9/28, A47L 9/32, A47L 9/24, A47L 9/00, A47L 5/28, A47L 5/36

(54) **VACUUM CLEANER**
STAUBSAGER
ASPIRATEUR

(43) Date of publication of application: 18.08.2021
(73) Proprietor: Aktiebolaget Electrolux, 105 45 Stockholm (SE)
(72) Inventor: KARLSSON, Roger, 105 45 Stockholm (SE)
(74) Representative: Electrolux Group Patents
(86) International application number: PCT/EP2018/077815
(87) International publication number: WO 2020/074088

(56) References cited:
- EP-A2- 0 005 218
- DE-A1- 2 815 196
- DE-A1-102004 014 252
- DE-A1-102007 057 589
- JP-A- H01 223 923
- JP-A- H07 308 272

## Description

### Field of the invention

The present disclosure relates to a vacuum cleaner comprising a fan driven by a motor, the fan being configured to generate a suction flow from a vacuum cleaner nozzle via a tube, to a dust separation device, the vacuum cleaner comprising a handle. The present disclosure further relates to a method carried out in such a vacuum cleaner.

### Technical background

Such a vacuum cleaner is disclosed for instance in US-2018/0177368-A1. One technical problem associated with most vacuum cleaners is that to provide efficient cleaning a substantial suction force should be provided. This however may cause the vacuum cleaner's nozzle to become stuck, for instance when cleaning thick rugs, which disturbs operation of the vacuum cleaner. Further, different solutions for varying the motor power when the nozzle is stuck are described in DE10 2004 014252, EP 0005 218, and JP H01 223 923.

### Summary of the invention

One object of the present disclosure is therefore to provide a vacuum cleaner that can run at high power while becoming stuck to a lesser extent. This object is achieved by means of a vacuum cleaner as defined in claim 1. More specifically, in a vacuum cleaner of the initially mentioned kind, a sensing device is provided, measuring a force along a direction between the handle and said nozzle. A control arrangement controls the output of the motor in response to the measured force. This arrangement allows the vacuum cleaner to temporarily lower the output in response to an increasing force applied between the nozzle and the handle, indicating that the nozzle is about to become stuck. This serves to avoid the nozzle becoming stuck, while maintaining an overall high power.

The sensing device may comprise a variable resistor. For instance, the variable resistor may be arranged at first and second parts, which are slideable in relation to each other in said direction against the force of a spring thereby changing the resistance of the variable resistor.

In another example, the sensing device may be a strain gauge load cell, which does not need moveable parts to provide an output. Such a load cell may be located in the aforementioned tube.

The control arrangement is adapted to lower the motor output if the sensed force exceeds a predetermined threshold. The motor output is then lowered during a period of time.

Alternatively, the control arrangement may be configured to vary the motor output as a function of the sensed force.

The sensing device may be located in a vacuum cleaner tube, or in or close to the handle, e.g. in a bent end part.

The control arrangement may be affected by a user setting, e.g. the user setting may include turning an output-lowering function off, or may affect a threshold.

The vacuum cleaner may be of a type comprising a housing containing the motor, the fan and the dust separation device, wherein the housing is configured to be moveable on a floor, and a flexible tube connects the housing to one end of a rigid tube. This tube may have a handle part, and may comprise a nozzle arranged on the other end of the rigid tube.

Alternatively, the vacuum cleaner may be an upright- or stick-type vacuum cleaner.

Regardless of the vacuum cleaner type, the dust separation device may be a dust bag, a filter, a cyclone, or a combination thereof.

The present disclosure also relates to a method in a vacuum cleaner comprising a fan driven by a motor, the fan being configured to generate a suction flow from a vacuum cleaner nozzle via a tube, to a dust separation device, the vacuum cleaner comprising a handle. The method involves measuring a force along a direction between the handle and the nozzle, and controlling the output of the motor in response to the measured force. A force exceeding a predetermined threshold may trigger the lowering of the motor output during a predetermined time. This provides advantages corresponding to the vacuum cleaner as described above.

### Brief description of the drawings

Fig 1 illustrates an example of a vacuum cleaner.
Fig 2 shows a block diagram of a control function according to the present disclosure.
Figs 3a and 3b illustrate schematically a first example of a strain sensing arrangement.
Fig 4 illustrates a second example of a strain sensing arrangement.
Fig 5 illustrates a basic method for a control arrangement.
Fig 6 illustrates an upright- or stick-type vacuum cleaner.

### Detailed description

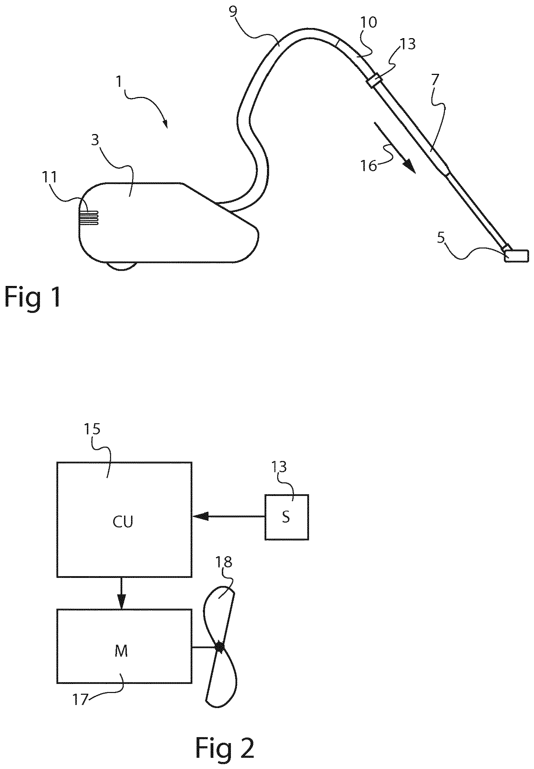

The present disclosure relates to a vacuum cleaner, for instance as illustrated in fig 1. This vacuum cleaner 1 comprises a main housing 3 comprising a motor, a fan and a dust separation device hidden therein. The motor is driven by a battery or by a connection via a cord to a mains socket. The motor is connected to the fan which provides a strong air flow from a nozzle 5 via a tube arrangement 7, 9 through the dust separation device in the housing 3 and to the ambient space through an air outlet 11 in the housing 3. In general, a dust separation device is used, which may be a dust bag, a filter, a cyclone, or a combination thereof.

In the illustrated case, the housing 3 is configured to be moveable on the floor by rolling, while the user maneuvers the tube arrangement. The tube arrangement comprises a flexible tube part 9 leading from the housing 3 on the floor to a rigid tube 7, leading to the nozzle 5, which often rests on the floor for floor cleaning.

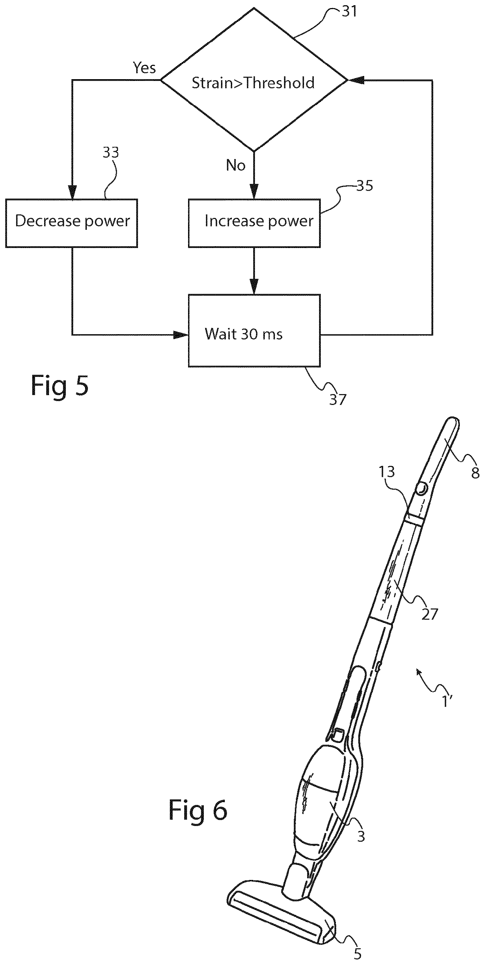

The present disclosure is however equally useful in an upright- or stick-type vacuum cleaner 1' such as illustrated in fig 6, only having a stiff tube 27 leading from the nozzle 5 to a handle 8 and where the housing 3 is fitted on this stiff tube. In both cases the user moves the nozzle around by pushing and pulling the rigid tube 7, 27 in different directions, sometimes also lifting the nozzle 5 from the floor.

The above-mentioned basic vacuum cleaner designs are well known as such. Recent initiatives such as regulations has sought to reduce the power used in a vacuum cleaner, for instance by limiting the maximum electric power used. By e.g. clever nozzle designs it has been possible to maintain or even improve the vacuum cleaner's dust removing efficiency despite lowered maximum motor power. This has partly been achieved by making the inner space in the nozzle greater, and by making the outer boundaries of the nozzle to provide a tighter seal between this inner space and the ambient room. While this works very smoothly in most cases, for instance on hard floors, some circumstances may lead to problems.

For instance, when vacuum cleaning a thick rug, the nozzle may in some cases become stuck on the rug and may be very difficult to move. A firm movement by the user in that case may even move the rug as a whole rather than cleaning the same.

This problem has been addressed to some extent US-2978733-A shows one such example where an attempted movement of a rigid tube, in a case where the nozzle is difficult to move, opens a bypass opening that leaks air into the tube, possibly making the nozzle come loose from a rug or the like.

While such a solution helps temporarily, its use may be quite disturbing. As soon as the nozzle begins to move, the bypass opening is closed, meaning that the nozzle can again become stuck on the rug. The result may be a jumping motion of the nozzle if pushed or pulled over a rug. Also, the bypass opening produces a hissing sound that may be unpleasant.

The present disclosure seeks to accomplish an improved solution to this problem. This is done by providing a sensing device 13, which senses strain in the tube 7, 27 along the elongate direction 16 thereof. As illustrated in fig 2, instead of leaking air into the tube 7, a control arrangement 15 controls the output of the motor 17 in response to the sensed strain to change the pressure drop obtained with the fan 18.

This provides a more adaptable solution. For instance, if the sensor 13 provides a signal to the control unit 15 which indicates that the nozzle 5 is stuck, it is possible to lower the power output e.g. to 90% of normal power for a few seconds, e.g. 5-15 seconds as measured with a timer. If, during this period, it is again detected that the nozzle 5 becomes stuck again, it is possible for instance to lower the output power further, e.g. to 80% of normal power, and to reset the timer for a new lowered period. A number of different control schemes are possible to this end. It is even possible to make the vacuum cleaner adapt permanently to the area where it is used. For instance, it could know that the user's apartment has two rugs, one thick where a 75% output power is needed, and which is usually cleaned for about 45 second and a bigger but thinner one where a 90% output power is suitable, and which is cleaned for about 75 seconds. When sensing that the thick rug is cleaned, the control unit 15 may simply lower the motor's 17 output power to 75% for 45 seconds to provide a more effortless cleaning experience. Should the user desire to deep-clean a rug, for instance, the power-lowering function can be turned off.

In general, thus, this allows the vacuum cleaner to adapt to different floor surfaces. The control functions may be integrated with other control functions as software running on the control unit.

Other advantages with this arrangement is that the hissing sound of a bypass opening is eliminated and that even more energy is saved during the periods when the motor output power is lowered.

The sensing device 13 (cf. fig 1) may for instance be located in a vacuum cleaner tube end 10, which may be bent and form a handle part, eg. the so-called bent end.

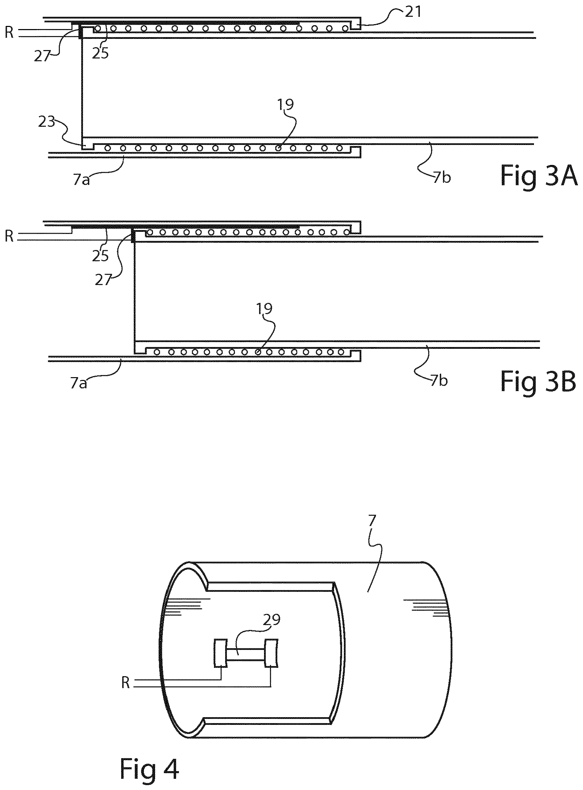

Figs 3a and 3b illustrate schematically a first example of a strain sensing arrangement. In this case, the sensing device is a spring-loaded rheostat.

By a rheostat is here meant a variable resistor. It may be implemented with two terminals of a linear potentiometer.

This may be done by providing a rigid tube (cf. 7 in fig 1) as two pieces 7a, 7b, where one 7b fits inside the other 7a, and is slideable therein in a telescopic manner. A spring 19 is fitted in between the two tube pieces 7a, 7b, and is trapped in this space by means of an outer circumferential ledge 23, at the end of the inner tube piece 7b, and a corresponding inner ledge 21 at the end of the outer tube piece 7a. By this configuration, the inner tube piece 7b can be slid towards the end of the outer tube piece 7a by compressing the spring 19, which requires the application of a strain in the elongate direction of the tube arrangement 7a, 7b.

This movement can be sensed by means of a rheostat arrangement 25, 27. In a basic configuration this can be made up from an insulated resistive layer 25 which is attached on the inside of the outer tube piece 7a, and a sliding connector 27 attached to the end of the inner tube piece 7b. When the tube 7a, 7b is subjected to a strong pulling strain, it is made longer by compressing the spring 19, and the sliding connector 27 slides along the resistive layer 25. This results in a resistance R between the end of the resistive layer 25 and the sliding connector 27 increasing, which can be detected by the control unit. Needless to say, the skilled person can obtain a rheostat arrangement providing a similar function in different ways, for instance detecting instead a pushing of the tube arrangement 7a, 7b.

Fig 4 illustrates a second example of a strain sensing arrangement. In this case, the sensing device is a strain gauge load cell 29 which is attached to the inner surface of a tube 7. Such a load cell is capable of sensing a very small deformation of the tube 7, and although the difference in resistance is much lower than in the preceding example, an advantage is that no moveable parts are needed. The strain gauge load cell could be located on the outside of the tube as well.

Other ways of obtaining a sensing device are of course possible, piezo-electric cells could be considered, for instance.

Fig 5 illustrates a basic method for a control arrangement. It is tested 31 whether a strain in a tube part exceeds a predetermined threshold. If this is the case, the motor power can be decreased 33 to some extent, and if not, the motor power can instead be increased 35, unless the motor does not already run at full power. The process may then wait 37 a predetermined period of time, e.g. as illustrated 30 ms, and subsequently repeat the test 31, perhaps lowering the power further. As mentioned this process can be made much more complex if desired. For instance, the threshold could be adaptable.

A simpler function may also be provided where the motor output is lowered during a period of time once high strain is detected, and then returns to normal output power. The length of this period of time may be adjusted depending on strain detection to obtain smooth operation. It is also possible to make the control unit vary the motor output as a function of the sensed strain. The control arrangement may also be affected by a user setting, e.g allowing a higher power should the user temporarily need a high power to clean a very dusty rug allowing the nozzle to become stuck, for instance. The user may also change the force threshold, or switch the power reduction function off, for instance if deep-cleaning of a rug is desired.

The present disclosure is not restricted to the above-described embodiment and may be varied and altered in different ways within the scope of the appended claims.

## Claims

1. Vacuum cleaner (1) comprising a fan (18) driven by a motor (17), the fan being configured to generate a suction flow from a vacuum cleaner nozzle (5) via a tube (7), to a dust separation device, the vacuum cleaner comprising a handle (10, 8) a sensing device (13), measuring a force along a direction between the handle (10; 8) and said nozzle (5), and a control arrangement (15) controlling the output of the motor (17) in response to the measured force **characterized in that** the control arrangement is adapted to lower the motor output if the sensed force exceeds a predetermined threshold, and wherein the motor output is lowered during a period of time.

2. Vacuum cleaner according to claim 1, wherein the sensing device comprises a variable resistor (25, 27).

3. Vacuum cleaner according to claim 2, wherein the variable resistor (25, 27) is arranged at first and second parts (7a, 7b), which are slideable in relation to each other in said direction against the force of a spring (19) thereby changing the resistance of the variable resistor.

4. Vacuum cleaner according to claim 1, wherein the sensing device is a strain gauge load cell (29).

5. Vacuum cleaner according to claim 4, wherein the load cell is located in said tube (7).

6. Vacuum cleaner according to any of the preceding claims, wherein the sensing device is located in a vacuum cleaner tube bent end.

7. Vacuum cleaner according to any of the preceding claims, wherein the control arrangement is affected by a user setting.

8. Vacuum cleaner according to claim 7, wherein the user setting includes turning an output-lowering function off.

9. Vacuum cleaner according to claim 1 and 8, wherein the user setting includes a setting of said threshold.

10. Vacuum cleaner according to any of the preceding claims, comprising a housing (3) containing the motor and the fan and the dust separation device, wherein the housing is configured to be moveable on a floor, a flexible tube (9) connects the housing to one end of a rigid tube (7) comprising a handle part (10), and a nozzle (5) arranged on the other end of the rigid tube.

11. Vacuum cleaner according to any of claims 1-9, wherein the vacuum cleaner is an upright- or stick-type vacuum cleaner (1').

12. A vacuum cleaner according to any of the preceding claims, wherein the dust separation device is a dust bag, a filter, a cyclone, or a combination thereof.

13. A method in a vacuum cleaner (1) comprising a fan (18) driven by a motor (17), the fan being configured to generate a suction flow from a vacuum cleaner nozzle (5) via a tube (7), to a dust separation device, the vacuum cleaner comprising a handle (10, 8) the method comprising measuring a force along a direction between the handle (10; 8) and said nozzle (5), and controlling the output of the motor (17) in response to the measured force **characterized in that** a force exceeding a predetermined threshold triggers the lowering of the motor output during a predetermined time.

## Patentansprüche

1. Staubsauger (1), umfassend ein Gebläse (18), das durch einen Motor (17) angetrieben wird, wobei das Gebläse dazu ausgelegt ist, einen Saugstrom von einer Staubsaugerdüse (5) über ein Rohr (7) zu einer Staubabscheidevorrichtung zu erzeugen, wobei der Staubsauger einen Griff (10), eine Erfassungsvorrichtung (13), die eine Kraft entlang einer Richtung zwischen dem Griff (10; 8) und der Düse (5) misst, und eine Steueranordnung (15), die die Leistung des Motors (17) als Reaktion auf die gemessene Kraft steuert, **dadurch gekennzeichnet, dass** die Steueranordnung dazu eingerichtet ist, die Motorleistung zu verringern, wenn die erfasste Kraft einen vorbestimmten Schwellenwert überschreitet, und wobei die Motorleistung während einer Zeitspanne verringert wird.

2. Staubsauger gemäß Anspruch 1, wobei die Sensorvorrichtung einen variablen Widerstand (25, 27) umfasst.

3. Staubsauger gemäß Anspruch 2, wobei der variable Widerstand (25, 27) an einem ersten und einem zweiten Teil (7a, 7b) angeordnet ist, die gegen die Kraft einer Feder (19) relativ zueinander verschiebbar sind, wodurch der Widerstand des variablen Widerstands verändert wird.

4. Staubsauger gemäß Anspruch 1, wobei die Messvorrichtung eine Dehnungsmessstreifenkraftmesszelle (29) ist.

5. Staubsauger gemäß Anspruch 4, wobei sich die Kraftmesszelle in dem Rohr (7) befindet.

6. Staubsauger gemäß einem der vorhergehenden Ansprüche, wobei sich die Sensorvorrichtung in einem gebogenen Ende des Staubsaugerrohrs befindet.

7. Staubsauger gemäß einem der vorhergehenden Ansprüche, wobei die Steueranordnung durch eine Benutzereinstellung beeinflusst wird.

8. Staubsauger gemäß Anspruch 7, wobei die Benutzereinstellung das Ausschalten einer Leistungsabsenkungsfunktion beinhaltet.

9. Staubsauger gemäß Anspruch 1 und 8, wobei die Benutzereinstellung eine Einstellung des Schwellenwerts beinhaltet.

10. Staubsauger gemäß einem der vorhergehenden Ansprüche, umfassend ein Gehäuse (3), das den Motor und das Gebläse und die Staubabscheidevorrichtung enthält, wobei das Gehäuse auf einem Boden bewegbar ausgebildet ist, ein flexibles Rohr (9), das das Gehäuse mit einem Ende eines starren Rohrs (7) verbindet, das ein Griffteil (10) umfasst, und eine Düse (5), die an dem anderen Ende des starren Rohrs angeordnet ist.

11. Staubsauger gemäß einem der Ansprüche 1 bis 9, wobei der Staubsauger ein Stand- oder Stielstaubsauger (1') ist.

12. Staubsauger gemäß einem der vorhergehenden Ansprüche, wobei die Staubabscheidevorrichtung ein Staubbeutel, ein Filter, ein Zyklon oder eine Kombination davon ist.

13. Verfahren in einem Staubsauger (1), der ein durch einen Motor (17) angetriebenes Gebläse (18) umfasst, wobei das Gebläse dazu ausgelegt ist, einen Saugstrom von einer Staubsaugerdüse (5) über ein Rohr (7) zu einer Staubabscheidevorrichtung zu erzeugen, wobei der Staubsauger einen Griff (10, 8) umfasst, wobei das Verfahren das Messen einer Kraft entlang einer Richtung zwischen dem Griff (10; 8) und der Düse (5) und das Steuern der Leistung des Motors (17) als Reaktion auf die gemessene Kraft umfasst, **dadurch gekennzeichnet, dass** eine Kraft, die einen vorbestimmten Schwellenwert überschreitet, das Absenken der Motorleistung während einer vorbestimmten Zeit auslöst.

## Revendications

1. Aspirateur (1) comprenant un ventilateur (18) entraîné par un moteur (17), le ventilateur étant configuré pour générer un flux d'aspiration à partir d'une buse (5) d'aspirateur, via un tube (7), jusqu'à un dispositif séparateur de poussière, l'aspirateur comprenant un manche (10, 8), un dispositif capteur (13), mesurant une force suivant une direction entre le manche (10, 8) et ladite buse (5), et un agencement de commande (15) commandant la sortie du moteur (17) en réponse à la force mesurée, **caractérisé en ce que** l'agencement de commande est adapté à réduire la sortie du moteur si la force captée dépasse un seuil prédéterminé, et la sortie du moteur étant réduite pendant une certaine durée.

2. Aspirateur selon la revendication 1, dans lequel le dispositif capteur comprend une résistance variable (25, 27) .

3. Aspirateur selon la revendication 2, dans lequel la résistance variable (25, 27) est agencée au niveau de première et deuxième parties (7a, 7b), lesquelles sont susceptibles de coulisser entre elles dans ladite direction à l'encontre de la force d'un ressort (19) de manière à modifier la résistance de la résistance variable.

4. Aspirateur selon la revendication 1, dans lequel le dispositif capteur est un peson à jauge de contrainte (29) .

5. Aspirateur selon la revendication 4, dans lequel le peson est situé dans ledit tube (7).

6. Aspirateur selon l'une quelconque des revendications précédentes, dans lequel le dispositif capteur est situé dans une extrémité recourbée du tube de l'aspirateur.

7. Aspirateur selon l'une quelconque des revendications précédentes, dans lequel l'agencement de commande est sensible à un réglage par l'utilisateur.

8. Aspirateur selon la revendication 7, dans lequel le réglage par l'utilisateur comporte la désactivation d'une fonction de réduction de la sortie.

9. Aspirateur selon les revendications 1 et 8, dans lequel le réglage par l'utilisateur comporte un réglage dudit seuil.

10. Aspirateur selon l'une quelconque des revendications précédentes, comprenant un carter (3) contenant le moteur et le ventilateur et le dispositif séparateur de poussière, le carter étant configuré pour être déplaçable sur un sol, un tube flexible (9) raccordant le carter à une extrémité d'un tube rigide (7) comprenant une partie manche (10) et une buse (5) agencée sur l'autre extrémité du tube rigide.

11. Aspirateur selon l'une quelconque des revendications 1 à 9, l'aspirateur étant un aspirateur de type vertical ou balai (1').

12. Aspirateur selon l'une quelconque des revendications précédentes, dans lequel le dispositif séparateur de poussière est un sac à poussière, un filtre, un cyclone ou une combinaison de ceux-ci.

13. Procédé dans un aspirateur (1) comprenant un ventilateur (18) entraîné par un moteur (17), le ventilateur étant configuré pour générer un flux d'aspiration à partir d'une buse (5) d'aspirateur, via un tube (7), jusqu'à un dispositif séparateur de poussière, l'aspirateur comprenant un manche (10, 8), le procédé comprenant la mesure d'une force suivant une direction entre le manche (10, 8) et ladite buse (5), et la commande de la sortie du moteur (17) en réponse à la force mesurée, **caractérisé en ce qu'**une force qui dépasse un seuil prédéterminé déclenche la réduction de la sortie du moteur pendant une durée prédéterminée.
